# EUROPEAN PATENT APPLICATION

(11) **EP 0 953 947 A2**
(43) Date of publication of application: **03.11.1999**
(21) Application number: 99303209.3
(22) Date of filing: 26.04.1999
(51) Int. Cl.: G07F 19/00, G07F 7/10

(54) **Self service terminal**

(30) Priority: 29.04.1998 GB 9808997; 12.01.1999 US 229045
(71) Applicant: NCR INTERNATIONAL INC., Dayton, Ohio 45479 (US)
(72) Inventor: Coutts, Michael G., Birkhill, Dundee DD2 5RJ, Scotland (GB); Dove, Lee G., Perthshire PH13 9HS, Scotland (GB)
(74) Representative: Cleary, Fidelma

(57) **Abstract**

A self service terminal, for example an ATM (26,102,202) comprises a plurality of peripherals such as a card reader (16,116,216), a receipt printer (18,118,218), a cash dispenser (20,120,220), and a user interface (22,128 and 130,222). Each peripheral has an independent control application (30,32,34,36). In use, the independent control applications communicate with each other so that a peripheral operates in response to a signal generated by another peripheral. A peripheral for use in such a terminal (26,102,202), and a network (100,200) of such terminals are also described.

## Description

This invention relates to a self service terminal (SST) and to a network of SSTs. In particular, the invention relates to a transaction terminal, such as a banking or retail transaction terminal, and to a network of such terminals.

A typical transaction terminal may be an automated teller machine (ATM), a retail point-of-sale (PoS) terminal, a financial services centre (FSC), or a transaction kiosk. Each terminal has a central processor, typically PC based, which controls the operation of the terminal. Conventionally, the application software for controlling the terminal operation is stored on a mass storage device within the terminal such as a hard disk.

A transaction terminal is connected by a communication link to a server containing (or being able to access) an information database (termed a legacy Host). A plurality of terminals, which may be of the same or of a different kind; are connected to the server in a transaction network. Simple client-server transactions are conducted between the terminal and the server to obtain specific customer information used in the processing of the customer's transaction. In the case of a banking terminal (such as an ATM) the transaction may typically be a cash withdrawal or a balance request. In the case of a retail terminal (such as a PoS terminal) a typical transaction is a price lookup.

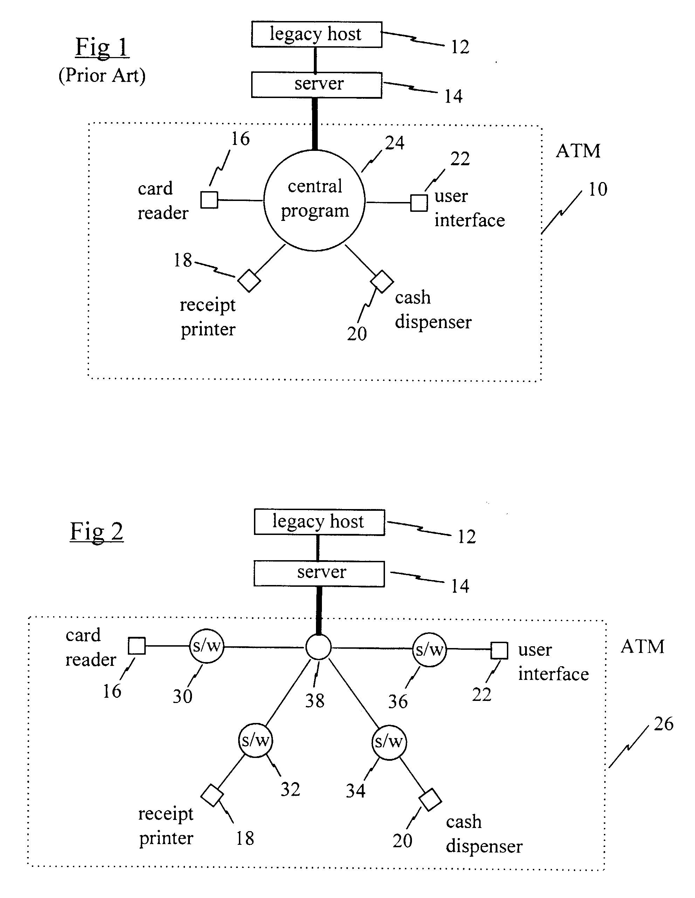

Fig 1 is a block diagram of an ATM 10 (indicated by a dotted line) connected to a legacy host 12 via a server 14, the ATM 10 having a card reader 16, a receipt printer 18, a cash dispenser 20, and a user interface 22 (including an encrypting keyboard and a display). These devices must be provided with appropriate control software, and also require some form of embedded processing capability to conduct communications with a central processor and to implement commands received therefrom.

All application software, peripheral device drivers and user interface files are held in a mass storage device in the ATM 10. Typically these applications, drivers, and files form a large, monolithic central program 24 which is used to control all aspects of the operation of the ATM 10. This central program 24 runs on a central processor and performs a number of functions; for example, determining what graphics are presented to the customer on the display, retrieving encrypted PIN information from the card reader and passing it to the encrypting keyboard for validation, checking that the customer's account has sufficient funds if a cash withdrawal is requested, and such like.

This central program 24 also includes the necessary business logic (which integrates and manages the different functions of the terminal) and error handling routines (which minimise the possibility of the terminal having to go out of service due to a malfunction). Therefore, design of this central program 24 is very complex and time consuming. In addition, updating device drivers or application software associated with a peripheral device is complicated because of the size of the central program 24.

It is anticipated that future SSTs will require the ability to change their capabilities during operation, for example, depending on what type of "Smart" card is used, or what type of graphics format is to be printed.

Application development tools are available that allow a developer to consider peripheral devices (hereinafter referred to a peripherals) as functional components, but it is still necessary to provide business logic and error handling facilities for these components within a single central program.

It is an object of the invention to provide an SST and a network of SSTs in which one or more of the above problems are mitigated or overcome.

This object is achieved generally by removing control of the terminal from one central program and providing each peripheral with its own dedicated program for controlling that peripheral. Each peripheral operates on a peer to peer basis and each peripheral has a common application flow so that the peripherals are not controlled by one central program but operate and interact as a team. The term application flow relates to the sequence of possible events within a terminal.

According to a first aspect of the invention a self service terminal comprises a plurality of peripheral devices characterised in that each device has an independent control application, the control applications being operable to communicate with each other; whereby, in use, a peripheral operates in response to a signal generated by another peripheral.

By virtue of the invention peripheral-specific control applications operate and interact as a team so that there is no requirement for a central program to manage the peripherals and instruct them to operate. Another advantage of the invention is that the control application for each peripheral can be updated easily as it does not form part of a large central program.

According to a second aspect of the invention there is provided a peripheral device for use in a self service terminal having a plurality of such devices, characterised in that the device has an independent control application which is operable to communicate the internal states of the device to other devices in the terminal and to operate in response to signals communicated from control applications of other devices.

Preferably, the control applications communicate with each other using a process to process communication protocol, such as TCP/IP, thereby allowing one process (one control application) to communicate with another process (another control application) whether both processes (control applications) are running on the same processor or not.

The control applications may communicate with each other using broadcast signals, whereby a peripheral communicates to all other peripherals within the terminal its present state. Alternatively or additionally, the control applications may communicate with each other using signals addressed directly to selected peripherals so that a peripheral communicates with those peripherals whose operation depends on or is connected with the state of that peripheral.

Preferably, a control application which operates in response to a signal communicated from another peripheral acknowledges receipt of that signal. This may be implemented by a protocol used for communications between peripherals, that is, the acknowledgement may be inherent in the protocol used.

Preferably, each control application is operable to identify any peripheral which does not acknowledge receipt of a signal (a failed peripheral) and to communicate the functional departure of that failed peripheral to the other peripherals. In the embodiment where a broadcast message is used then any peripheral may identify the failed peripheral and communicate the functional departure of the failed peripheral (by a broadcast message or by a direct message) to the other peripherals. In the embodiment where direct signals are sent then the peripheral which sent the signal that was not acknowledged may identify the failed peripheral and send a message to the other peripherals.

The control application for each peripheral may have a register which maintains a record of the functioning peripherals in the terminal.

Preferably, the control applications implement a team-building process whereby they indicate their availability.

Preferably, the respective control application associated with each peripheral available to the terminal transmits a start-up signal as part of the team-building process. The start-up signal includes an identifier for the peripheral being initialised and an address at which the peripheral receives signals. The start-up signal may be broadcast or communicated directly to predetermined addresses which correspond to other peripherals. The start-up signal may be transmitted by a control application on or shortly after power-up of the associated peripheral. On receiving a start-up signal, the control application associated with each peripheral available to the terminal transmits a reply signal to the control application which sent the start-up signal. The reply signal informs the sender of the start-up signal of the address and identity of the control application sending the reply signal.

Preferably, the control application associated with each peripheral creates a functional group register comprising the addresses and identity of each peripheral which has sent a start-up signal. In use, a peripheral may use its functional group register for determining the address of another peripheral to which signals are to be sent. The words "functional group" are used herein to denote a team of peripherals which interoperate through mutual communication to provide all of the functionality of each peripheral within the group.

Preferably, each control application transmits a shut-down signal when its associated peripheral is no longer able to operate properly (for example, because of a malfunction); each control application being operable to modify its functional group register in response to a shut-down signal from another peripheral to indicate the removal of that peripheral from operation. Thus, the functional group register in each active peripheral (a peripheral receiving power and operating as part of a functional group) indicates the identity and address of all other active peripherals in that functional group. The functional group registers in the peripherals may be synchronously updated when a peripheral transmits a start-up signal or a shut-down signal.

Preferably, on detecting a start-up signal communicated from another peripheral a substantial period of time after the first start-up signal was communicated, each control application associated with an active peripheral transmits an active-confirm signal so that the peripheral which sent the start-up signal (the newly-activated peripheral) can correctly configure its functional group register. This is used so that when a peripheral is activated after other peripherals it can configure its register to include those peripherals which were already active (i.e. those peripherals which had sent a start-up signal prior to the newly-activated peripheral becoming active). This has the advantage that when a new peripheral is activated all the current members of the functional group (all of the currently active peripherals) introduce themselves to the new peripheral by sending their identification and address.

Alternatively, each control application associated with an active peripheral may transmit an active-confirm signal on each occasion that it receives a start-up signal. This ensures that a newly-activated peripheral is made aware of all the current members of the functional group.

It will be appreciated that although a peripheral is removed from a functional group, that peripheral may still be accessed by the terminal (for example, to check on its status). Removal from a functional group means that the functions provided by that peripheral are no longer available to a user of the terminal, it does not mean that the peripheral is no longer in communication with the terminal.

In use, the control applications may all run on a single central processor. Alternatively, in use, each of the control applications may run on a processor within its associated peripheral.

The peripherals may be selected from the following non-exhaustive list of peripherals, namely: a user interface, a card reader, a receipt printer, and a cash dispenser. The user interface may comprise a keyboard and a display unit. The SST may be an ATM.

According to a third aspect of the invention there is provided a self service terminal network, where the network comprises a server in communication with a terminal, the terminal including a plurality of peripherals characterised in that each device has an independent control application operable to communicate with the other independent control applications so that a peripheral operates in response to one or more signals generated by the control application of another peripheral.

Each terminal may communicate with the server using a dedicated link. Alternatively, each terminal may communicate with the server using a modem and information signal transfer means for enabling transfer of signals from the modem through a telephone network to the server.

The control application associated with each peripheral may have direct access to the server. Alternatively, the control application associated with each peripheral may access the server indirectly, for example, via a communications controller, where the communications controller is responsive to each of the control applications for facilitating communication with the server.

The network may include an information database (legacy Host) with a communications link extending between the information database and the server.

According to a fourth aspect of the invention there is provided a peripheral device that announces the functional departure of other peripheral devices from a connected system comprising a transaction processing terminal by transmitting the identity of any peripheral device failing to acknowledge receipt of a previous communication.

The transmission may be in the form of a broadcast.

According to a fifth aspect of the invention there is provided a peripheral device that records the functional departure of other peripheral devices in a connected system comprising a transaction processing terminal by deleting reference in an internal register to any peripheral device which either announces that it is shutting down or has failed to respond to a previous communication.

Preferably, the peripheral device has a memory queue for storing incoming messages from other peripheral devices that are part of a functional group, where the messages are stored in the queue in the order received and the device accesses the oldest stored message first and deletes a message from the queue once accessed.

According to a sixth aspect of the invention there is provided a functional group of peripheral devices that interoperate through communications over a connected network in which each device synchronously maintains a dynamic register used to identify the devices that are functionally present and to direct communications within the functional group of devices, where the functional group comprises a transaction processing terminal.

According to a seventh aspect of the invention there is provided a transaction terminal comprising a plurality of networked peripheral devices that interoperate through peer to peer communications with one another, and a firewall enabling communications between the networked devices and a server connected to the network, but blocking the peer to peer communications between devices from being transmitted to the server.

According to an eighth aspect of the invention there is provided a server device that operates both as a repository for software used by a plurality of interoperable peripheral devices communicating over a connected network, and as a proxy server for data required by at least one of the peripheral devices to process a transaction.

According to a ninth aspect of the invention there is provided a peripheral device that operates as a state machine based upon hardware states communicated through interfaces to hardware under control of the peripheral device, and based upon messages received from other peripheral devices over a connected network.

Fig 1 is a block diagram illustrating a prior art ATM network and the software control of peripherals within an ATM.

Embodiments of the invention will now be described, by way of example, with reference to the rest of the accompanying drawings, in which:
Fig 2 is a block diagram illustrating the software control of peripherals within an ATM in accordance with one embodiment of the present invention;
Fig 3 is a block diagram of an ATM network in accordance with an embodiment of the invention;
Figs 4A,B,C are tables illustrating a feature of the embodiment of Fig 3;
Fig 5 is a flow chart illustrating a typical sequence of events in an ATM terminal as shown in Fig 3;
Fig 6 is a block diagram of an ATM network in accordance with an alternative embodiment of the invention; and
Fig 7 is a table illustrating a feature of the embodiment of Fig 6.

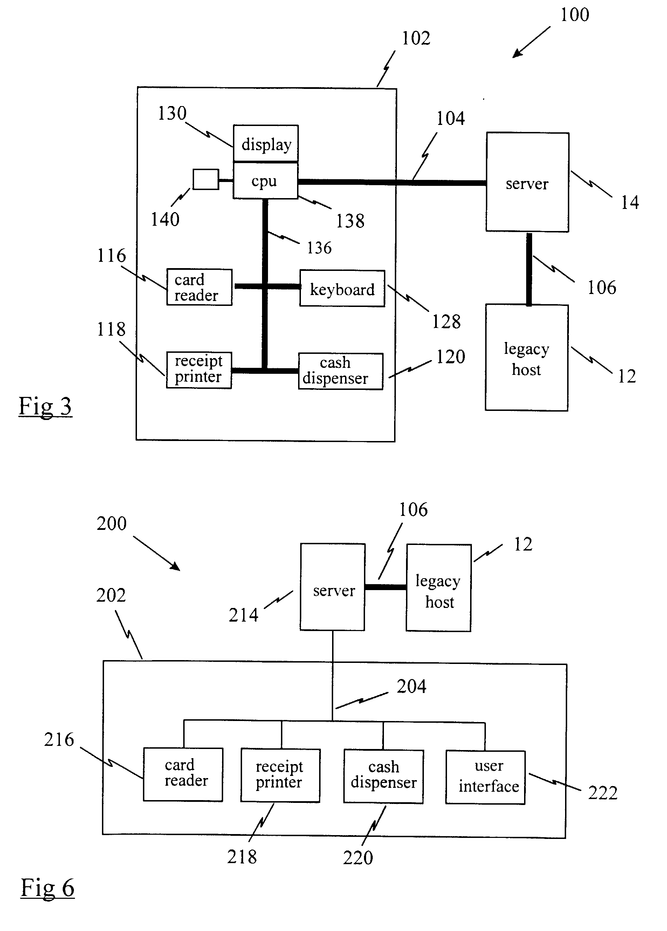

Referring to Fig 2, there is shown a diagram illustrating the software control of peripherals according to one embodiment of the present invention, wherein like numerals in Fig 2 refer to like features in Fig 1. In Fig 2, an ATM 26 includes four peripherals 16,18,20,22 each having an associated control application 30,32,34,36. For example, card reader 16 has an associated card reader control application 30. Each of the control applications is connected to the server 14 via a communications controller 38 which is responsive to each of the control applications 30,32,34,36 for facilitating communication with the server 14. Each control application (e.g. 30) controls its associated peripheral (e.g. 16) using dedicated device drivers (not shown) for that peripheral.

Referring to Fig 3 there is shown therein a block diagram of a self service network 100 in the form of an ATM transaction network comprising an ATM 102 connected to a server 14 via a high order communications link 104 which is part of a wide area network. The link 104 provides efficient transfer of data from server 14 to ATM 102. A transaction database (or legacy host) 12 is also connected to server 14 via a conventional communications link 106.

ATM 102 houses a plurality of peripherals including a card reader 116, a receipt printer 118, a cash dispenser 120, an encrypting keyboard 128 and a display 130 (the keyboard 128 and display 130 together form a user interface). A typical ATM keyboard will have a numeric keypad and a small number of additional keys, which may be labelled "ENTER", "CANCEL" and so on. These peripherals 116,118,120,128,130 are connected by an RS-232 link 136 to a central processor 138 housed in ATM 102.

ATM 102 also has a mass storage device 140 in the form of a hard disk. This hard disk 140 stores at least one device driver and at least one control application (similar to 30,32,34,36 in Fig 2) for each of the peripherals 116,118,120,128,130. A TCP/IP protocol is used for communication within ATM 102.

When power is applied to ATM 102, the central processor 138 is initialised, which involves the device drivers and the control applications being loaded into the central processor 138 from the mass storage device 140. Each control application is an independent process running on processor 138. Once the device drivers and control applications have been loaded into the central processor 138, the control applications implement a team-building process to form a team of peripherals, as will be described below.

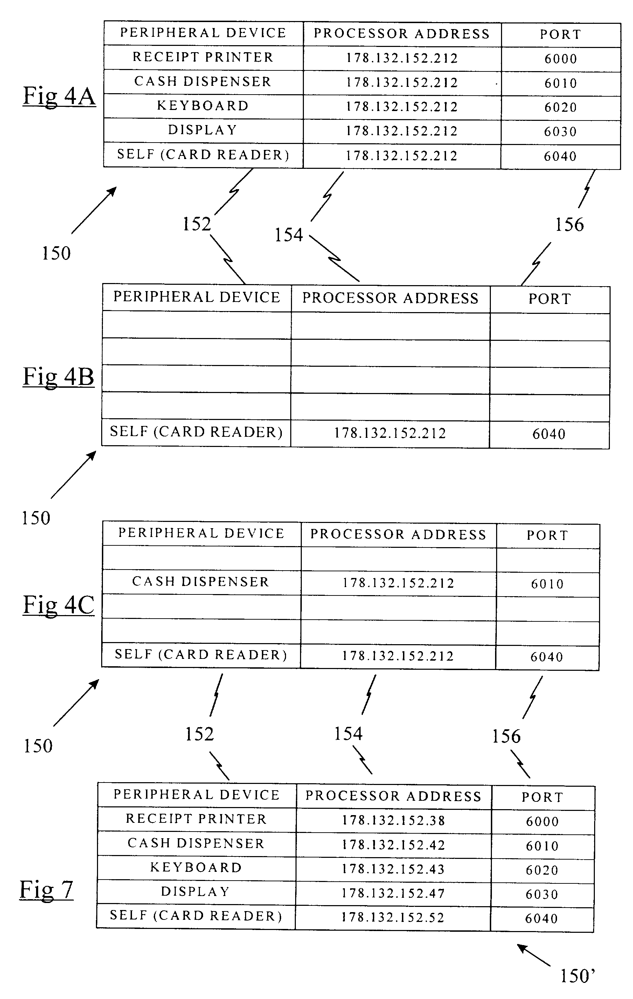

As part of the team-building process, the control application for each peripheral creates a functional group register which is stored as a linked-list. The first entry in the list being for that peripheral itself, the other entries being used for the other peripherals. Fig 4A illustrates a completed functional group register 150 for the card reader control application. This register 150 has an entry for each peripheral that may be part of the team, including the card reader peripheral. Each entry has three fields: a peripheral identification field 152, a peripheral IP address field 154, and a port address field 156.

The peripheral IP address field 154 is the address of the processor on which the control application associated with that peripheral is running. Thus, in the Fig 3 embodiment the peripheral IP address field 154 for each peripheral is the same, being the address of the processor 138 which runs all of the control applications. However, in embodiments where each peripheral runs its associated control application on its own processor then the address field 154 will contain the address of the relevant peripheral processor, i.e. the address field 154 of each peripheral will be different.

The port address field 156 at which each peripheral receives signals is predetermined, having been written into the control application associated with that peripheral.

Initially, the register 150 for the card reader control application will appear as shown in Fig 4B because the control application leaves all entries in the peripheral identification field 152 blank except the identification of its associated peripheral.

Even though a peripheral receives power, it may not be available for use and therefore may not be available to join the team. For example, a peripheral may have been shut down because of a malfunction, or because it needs replenished with paper (in the case of a receipt printer) or currency (in the case of a cash dispenser). Therefore, the card reader control application performs a test of the card reader to ensure that the card reader is functioning correctly. If the card reader is functioning correctly then the control application indicates its availability to join the team by broadcasting a start-up signal (a "HELLO" message) to other control applications.

A broadcast message on a TCP/IP network uses a special reserved IP address (255.255.255.255) . Every node (every device having an IP address) connected to that TCP/IP network receives the broadcast message.

The "HELLO" message includes an identifier for the peripheral being initialised and an address at which the peripheral receives signals. For example, the card reader control application would transmit the identifier "card reader", the processor address "178.132.152.212" (from processor IP address field 154), and the port address "6040" (from the port address field 156). The TCP stack within processor 138 would recognise that the IP address "178.132.152.212" relates only to itself and so would not transmit the broadcast over the physical layer. The control applications (running on processor 138) relating to the other peripherals would receive this "HELLO" message and if available to join the team would update their registers 150 accordingly.

It will be appreciated that the IP address used in this embodiment ("178.132.152.212") is merely an example of a typical IP address.

If a cash dispenser control application transmitted a "HELLO" message with the identifier "cash dispenser", the IP address "178.132.152.212", and the port address "6010" then the card reader control application would update its register 150 to include this information, as shown in Fig 4C. Thus, each peripheral control application maintains a register of the identity and address of all other active peripherals in the team.

Once the team-building process is complete, the individual control applications (similar to 30,32,34,36 in Fig 2) running on central processor 138 use client-server techniques to communicate with server 14 to obtain customer specific transactional information from legacy host 12.

The team building process also allows display 130 to determine what peripherals are available and therefore what services should be displayed for offering to a user; those services which are not available being shown in a different colour, or not shown at all.

It will be appreciated that although all of the control applications reside in the central processor 138 during operation of the ATM 102, each of the control applications is independent of the other control applications.

In the event of a malfunction during operation (for example if a card becomes jammed in card reader 116, or if paper jams in the receipt printer 118), a peripheral can withdraw from the team. This is effected by the control application for that peripheral sending a shut-down signal (a "GOODBYE" message) to indicate that it is no longer available. The "GOODBYE" message includes the identity of the peripheral that is withdrawing. Each control application in the team updates its register 150 by removing reference to the withdrawn peripheral from the register 150, thereby removing the peripheral from the team.

If a peripheral is physically removed, or if power to a peripheral fails then the first application module that attempts to send a message to the now missing peripheral will detect that it is missing and send a "GOODBYE" message on its behalf. In such an eventuality the "GOODBYE" message includes the identity of the missing peripheral rather than the identity of the peripheral sending the "GOODBYE" message. The control applications for the other (remaining) peripherals update their registers in response to this "GOODBYE" message.

When the peripheral is reconnected its associated control application will broadcast a "HELLO" message to allow the other control applications to update their registers 150. Once the team-building process is complete, any newly-joining peripheral will require information about the current members of the team. Therefore, when a "HELLO" message is received after the team-building process has been completed, each active control application (i.e. the control application for each active peripheral) retransmits a "HELLO" message to allow the newly-joining peripheral to create an accurate register 150 for the team.

The individual control applications are arranged to operate as a team, with each application module being considered as a team member or peer.

Having a common application flow for all control applications ensures uniformity in the way that each control application interfaces with other control applications and with any other devices in the ATM 102.

The control applications are event driven. Internal events (for example, user input or hardware activity) drive the state of each control application. As the state of a control application changes it transmits appropriate messages to all the other members of the team (i.e. all other active control applications). These event-based messages are used to enable other control applications to set themselves to an appropriate state.

As the state of any control application changes an event message is broadcast to allow the other members of the team to act appropriately. The state of a control application may change as a result of, for example, a hardware event, a user input, or a time-out condition.

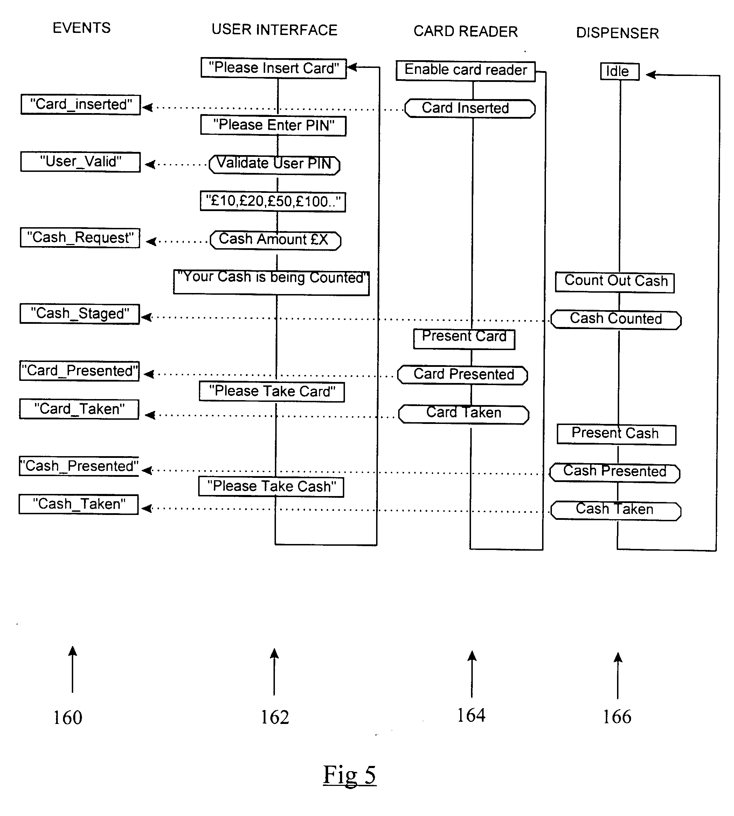

The ATM 102 operates as an event driven system. Messages are transmitted from the control application for a peripheral within which an event has occurred to other control applications within the ATM 102. These other control applications may, or may not, be concerned with that event. A typical transaction sequence is illustrated in Fig 5 for ATM 102.

Referring now to Fig 5 the first column 160 shows a sequence of events and their associated event messages. The second 162, third 164 and fourth columns 166 show operations of display 130, card reader 116 and cash dispenser 120 following generation of each event message listed in the first column 160. In the second column 162, which shows the operation of display 130, the statements within quotation marks are examples of the text displayed to a user.

Where ATM 102 is operating with a team of peripherals comprising: card reader 116, receipt printer 118, cash dispenser 120, keyboard 128, and display 130; in the event of insertion of a card by a new user into card reader 116 a message "CARD_INSERTED" is transmitted by the card reader control application to the other peripherals in the team.

The effect of that message is to cause display 130 to display the text "Please enter PIN". When the user has entered a PIN (personal identification number) a 'Validate User PIN' operation takes place. This might involve the use of link 104 to communicate with legacy Host 12 via server 14. If the entered PIN is found to be valid for the particular card that has been inserted into card reader 116 then display 130 is informed accordingly whereupon its control application generates a "USER_VALID" event message. This causes display of a cash selection request. The user then enters a specific amount which causes the transmission of the next event message, namely "CASH_REQUEST".

The "CASH_REQUEST" message causes operation of cash dispenser 120 to count out the requested amount while at the same time display 130 causes the text "Your cash is being counted" to be displayed on the screen. When cash dispenser 120 has completed its task, its associated control application generates and transmits a "CASH_STAGED" message. On receiving the "CASH_STAGED" message, card reader 116 presents the inserted card partly out of a card entry slot in ATM 102 to enable the card to be removed by the user. The control application associated with the card reader 116 then transmits the event message "CARD_PRESENTED" which in turn causes display 130 to display the text "Please take card".

When card reader 116 detects that the card has been taken its associated control application generates and transmits a "CARD_TAKEN" message. On receipt of this "CARD_TAKEN" message, the cash dispenser 120 presents the cash which it counted out. When the cash has been presented, the control application associated with the cash dispenser 120 generates and transmits a "CASH_PRESENTED" message to cause display 130 to display "Please take cash". On dispenser 120 detecting that the cash has been removed its associated control application transmits a "CASH_TAKEN" message to all of the control applications associated with the modules in the team. On receipt of the "CASH_TAKEN" message, each control application associated with a peripheral in the team resets its respective peripheral to its initial condition ready for another user.

From the above description it is apparent that the messages listed in the first column 160 of Fig 5 are used to drive individual application peripherals, and thus the operation as a whole, in the manner illustrated.

Although the messages are transmitted to all of the peripherals, in many cases only one peripheral or only some of the peripherals will make use of the messages. For example card reader 116 may need to know the amount of any cash withdrawal figure entered by the user so that it can update the card appropriately should that cash withdrawal be validated by server 14 and dispensed by cash dispenser 120.

Not shown in Fig 5 are the various communications that take place between individual peripherals and server 14 and legacy Host 12.

An alternative hardware architecture capable of providing an embodiment of the invention is shown in Fig 6, which illustrates an ATM transaction network 200 comprising an ATM 202 having a plurality of intelligent peripherals including a card reader 216, a receipt printer 218, a cash dispenser 220, and a user interface 222. User interface 222 includes both a keyboard and a display unit.

The fundamental difference between the peripherals of Fig 3 and Fig 6, for example card reader 116 and card reader 216, is that the peripherals in Fig 6 are configured so that they operate individually and independently of any central processor, each peripheral being operable: to communicate directly with the server 14; to download software therefrom; and to run the downloaded software directly on its own processor. Whereas, in contradistinction, the peripherals of Fig 3 are controlled from a central processor 138 which: communicates directly with the server 14; downloads software from the hard disk 140; and runs the downloaded software to control the peripherals.

However, in both embodiments (Fig 3 and Fig 6), the control applications for the peripherals, whether running on a central processor (Fig 3) or in the individual peripherals (Fig 6), communicate with each other and operate in response to signals generated by each other.

In Fig 6, each peripheral 216,218,220,222 has an embedded processor, associated volatile memory (for example 32Mbytes of RAM), non-volatile memory for booting-up the peripheral, and a TCP/IP network connection. ATM 202 is connected to server 214 by a communication link 204, which is part of a wide area network (WAN); where the WAN connects a plurality of ATMs to the server 214. Link 204 is a high bandwidth network connection to allow for efficient and rapid download of software and utilises the TCP/IP transfer protocol.

A feature of communication link 204 is that each peripheral 216,218,220,222 in ATM 202 is directly and independently connected to server 214 through link 204 and is thus an individual client to server 214. This is required for this embodiment because each peripheral must be able to download software independently of the other peripherals. In the same way as the Fig 3 embodiment, server 214 is connected to legacy Host 12 (which is a basic banking information database) through communications link 106.

The control applications software used by peripherals in ATM 202 is stored in server 214. The same applications software can also be used by corresponding peripherals in other terminals of the network 200 which are linked to server 214. Thus, one advantage of this arrangement is that control applications software can be updated at the server 214 and all associated peripherals will download the updated software, thereby centralising software upgrades.

In addition to link 204 providing a direct connection from each peripheral 216,218,220,222 to server 214, link 204 also enables communication to take place between the individual peripherals 216,218,220,222 of ATM 202. Thus information as to the operational state of any of the peripherals 216,218,220,222 can be transmitted to all of the other peripherals 216,218,220,222.

When a peripheral (e.g. 216) is first powered-up, it uses non-volatile memory to boot-up and then transmits a message to the server 214. On receiving this message, the server uploads software to the peripheral to enable the peripheral to initialise and begin the team-building process.

Although the hardware architecture of Fig 6 is different to that of Fig 3, the team-building process and subsequent operation, as described with reference to Figs 4 and 5, are the same for the two embodiments. Fig 7 shows a typical functional group register 150' for the embodiment of Fig 6, where each peripheral in the terminal has a different IP address because the processor in each peripheral runs its associated control application.

During operation, a request may be made by a peripheral to the server 214 for information specific to the user and appropriate to conduct the current transaction. For example, the cash dispenser 220 will require the user's current balance to determine if the user has sufficient funds for a requested cash withdrawal. User interface 222 may require account balance and bank statement information to display these to the user.

By having a direct connection from the peripherals to the server 214 it is possible to avoid using a central processor and a mass storage device.

It will be appreciated that the function of the communications controller 38 illustrated in Fig 2 may be incorporated into the central processor 138 (Fig 3 embodiment) or may be incorporated into each peripheral 216,218,220,222 (Fig 6 embodiment), or may be a separate network router which routes data from each peripheral 216,218,220,222 (Fig 6 embodiment) to the server 214 (Fig 6 embodiment).

The individual control applications that operate within either hardware embodiment of the invention (Fig 3 or Fig 6) are arranged to operate as a team, with each application module being considered as a team member or peer.

Various modifications may be made to the above described embodiments within the scope of the present invention, for example, the communications link 104 may be any convenient link and may be part of a local area network or it may be a dedicated link having a dial-up modem connection. In other embodiments, such as for a single off-site terminal, the communication link 204 may be a low speed dial-up modem. In other embodiments, a communications mechanism other than an RS-232 link 136 may be used, for example, a USB (universal serial bus), a Firewire, or an ethernet link may be used.

In embodiments where confidential transactions are processed, a firewall may be used to ensure that the transactions are secure and to protect the peripheral devices from being accessed by unauthorised persons. The firewall may be implemented between server 14 and legacy host 12.

In embodiments where a retail point of sale (PoS) terminal is used in a network, the legacy host may be a retail information database. In other embodiments, the addresses at which other peripherals may receive signals may be written into the control application for each peripheral so that each control application knows the address of its associated peripheral and all possible addresses of other peripherals. In other embodiments, a different communications protocol may be used, for example, an RS232-based protocol may be used instead of TCP/IP.

## Claims

1. A self service terminal (102 or 202) comprising a plurality of peripheral devices (116,118,120,122, or 216,218,220,222) characterised in that each device has an independent control application, the control applications being operable to communicate with each other; whereby, in use, a peripheral (116,118,120,122, or 216,218,220,222) operates in response to a signal generated by another peripheral (116,118,120,122, or 216,218,220,222).

2. A terminal according to claim 1, wherein the control applications communicate with each other using a process to process communication protocol.

3. A terminal according to claim 1, wherein the control applications communicate with each other using broadcast signals, whereby a peripheral (116,118,120,122, or 216,218,220,222) communicates to all other peripherals (116,118,120,122, or 216,218,220,222) its present state.

4. A terminal according to claim 1, wherein the control applications communicate with each other using signals addressed directly to selected peripherals so that a peripheral only communicates with those peripherals whose operation depends on or is connected with the state of that peripheral.

5. A terminal according to any preceding claim, wherein a control application which operates in response to a signal communicated from another peripheral acknowledges receipt of that signal.

6. A terminal according to claim 5, wherein each control application is operable to identify any peripheral which does not acknowledge receipt of a signal (a failed peripheral) and to communicate the functional departure of that failed peripheral to other control applications.

7. A terminal according to any preceding claim, wherein each peripheral (116,118,120,122, or 216,218,220,222) uses a register (150) for maintaining a record of the functioning peripherals in the terminal.

8. A terminal according to any preceding claim, wherein the control applications implement a team-building process for indicating their availability.

9. A terminal according to claim 8, wherein as part of the team-building process, each control application associated with an available peripheral device transmits a start-up signal.

10. A terminal according to claim 9, wherein the start-up signal includes an identifier for the peripheral device being initialised and an address at which the peripheral device receives signals.

11. A terminal according to claim 10, wherein the start-up signal is broadcast to other peripheral devices.

12. A terminal according to claim 10, wherein the start-up signal is communicated directly to predetermined addresses which correspond to other peripheral devices.

13. A terminal according to any preceding claim, wherein the control application associated with each peripheral device (116,118,120,122, or 216,218,220,222) creates a functional group register comprising the addresses and identity of each peripheral device which has sent a start-up signal.

14. A terminal according to claim 13, wherein each control application transmits a shut-down signal when its associated peripheral device is no longer able to operate properly; each control application being operable to modify its functional group register (150) in response to a shut-down signal from another peripheral device to indicate the removal of that peripheral device from operation.

15. A terminal according to any preceding claim, wherein, in use, each of the control applications are executed on a single central processor (138).

16. A terminal according to any one of claims 1 to 14, wherein, in use, each of the control applications is executed on a processor within its associated peripheral.

17. A terminal according to any preceding claim, wherein the peripheral devices (116,118,120,122, or 216,218,220, 222) are selected from the following peripheral devices, namely: a user interface (128 and 130, or 222), a card reader (116,216), a receipt printer (118,218) and a cash dispenser (120,220).

18. A self service terminal network, where the network comprises a server (14) in communication with a terminal (26,102,202), the terminal (26,102,202) including a plurality of peripheral devices (116,118,120,122, or 216,218,220,222) characterised in that each device has an independent control application operable to communicate with the other independent control applications so that a peripheral device operates in response to one or more signals generated by the control application of another peripheral device.

19. A terminal network according to claim 18, wherein the control application associated with each peripheral has direct access to the server.

20. A terminal network according to claim 18, wherein the control application associated with each peripheral accesses the server indirectly.

21. A peripheral device for use in a self service terminal having a plurality of such devices, characterised in that the device has an independent control application which is operable to communicate the internal states of the device to other devices in the terminal and to operate in response to signals communicated from control applications of other devices.
